# EUROPÄISCHE PATENTSCHRIFT

(11) **EP 0 697 146 B1**
(45) Veröffentlichungstag und Bekanntmachung des Hinweises auf die Patenterteilung: **02.06.1999**
(21) Anmeldenummer: 95910544.6
(22) Anmeldetag: 02.03.1995
(51) Int. Cl.: H02K 9/19, H02K 9/197, H02K 7/116

(54) **BÜRSTENLOSER ELEKTROMOTOR UND VERFAHREN ZU DESSEN BETRIEB**
BRUSHLESS ELECTRIC MOTOR AND METHOD OF OPERATING THE SAME
MOTEUR ELECTRIQUE SANS BALAI ET SON PROCEDE DE MISE EN ACTION

(30) Priorität: 08.03.1994 DE 4407713
(43) Veröffentlichungstag der Anmeldung: 21.02.1996
(73) Patentinhaber: GRÜNDL UND HOFFMANN GmbH GESELLSCHAFT FÜR ELEKTROTECHNISCHE ENTWICKLUNGEN, 82319 Starnberg (DE)
(72) Erfinder: RASCH, Reinhard, D-82229 Hechendorf (DE); GRÜNDL, Andreas, D-81377 München (DE); HOFFMANN, Bernhard, D-82319 Starnberg (DE)
(74) Vertreter: Schmidt, Steffen J., Dipl.-Ing.
(86) Internationale Anmeldenummer: EP9500768
(87) Internationale Veröffentlichungsnummer: WO9524762

(56) Entgegenhaltungen:
- FR-A- 1 381 593
- GB-A- 2 250 063
- US-A- 5 019 733
- PATENT ABSTRACTS OF JAPAN vol. 007 no. 226 (E-202) ,7.Oktober 1983 & JP,A,58 116044 (TOKYO SHIBAURA DENKI KK) 11.Juli 1983,
- PATENT ABSTRACTS OF JAPAN vol. 009 no. 332 (E-370) ,26.Dezember 1985 & JP,A,60 162434 (EBARA SEISAKUSHO KK) 24.August 1985,

## Beschreibung

Die vorliegende Erfindung betrifft einen bürstenlosen Elektromotor mit den Merkmalen des Oberbegriffs des Anspruchs 1.

Derartige Elektromotoren sind im Stand der Technik in vielfachen Ausführungsformen bekannt und sind im kühlmittelbeschickten Betrieb geeignet, mechanische Antriebsleistungen abzugeben, die im ungekühlten Betrieb nicht erreichbar sind. Als Kühlmittel wird in der Regel ein nicht aggressives Öl mit geringer Viskosität und hohem Siedepunkt verwendet.

Aus der DE 21 45 126 A1 ist eine derartige elektrische Maschine mit Ölsprühkühlung bekannt, bei der auf jeder Seite der Maschine in ihrem Inneren je ein Kühlkreis mit Sprühöffnungen vorgesehen ist, die das durch diese Öffnungen austretende Kühlmittel sowohl auf die Wickelköpfe des Stators, als auch auf den Rotor sprühen.

Allerdings sind bekannte Motoren meistens so ausgestaltet und dimensioniert, daß sie entweder permanent als Sprühölmotoren oder permanent als Unterölmotoren betrieben werden.

Bei Anwendungen, die gleichmäßige Antriebsleistungen benötigen, können derartige Motoren bei guten Leistungsdichten und hohem Wirkungsgrad eingesetzt werden.

Wenn eine Anwendung jedoch stark wechselnde Drehzahlen und/oder Drehmomente erfordert, wie dies z.B. beim Antrieb von Kraftfahrzeugen der Fall ist, sinkt der Wirkungsgrad in der Gesamtbilanz (Gesamt-Drehzahl- bzw. Gesamt-Drehmomentbereich) erheblich, da z.B. bei hohen Drehzahlen das Kühlmittel im Unterölmotor erhebliche Verluste bringt.

Es sind daher verbesserte Kühlsysteme vorgeschlagen worden.

Aus der AT 10 80 63 ist ein fremdbelüfteter Asynchronmotor bekannt, bei dem die Drehzahl und damit die Leistung des Kühlventilators in Abhängigkeit von der Schlupffrequenz des zu lüftenden Motors derart gesteuert ist, daß die Kühlwirkung mit der Schlupffrequenz wächst.

Aus der DE 25 38 561 A1 ist ein ölgekühlter Induktionsmotor bekannt, bei dem das gesamte Gehäuseinnere vollständig mit Öl gefüllt ist. Bei diesem Induktionsmotor ist die Ölumwälzpumpe mit der Lüfterwelle verbunden. Dadurch kann eine von der Drehzahl des Induktionsmotors abhängige Kühlung erreicht werden.

Aus der DE 42 13 132 A1 ist ein wassergekühlter bürstenloser Elektromotor bekannt. Das Kühlwasser wird hierbei durch Wasserkanäle in dem Gehäuse geführt. Neben der Wasserkühlung wird noch eine zusätzliche Luftkühlung für die Durchströmung des Gehäuses beschrieben, wobei das Umlaufen des Läufers für eine Luftzirkulation sorgt. Dabei wird die zirkulierende Luft nicht mit der Umgebungsluft ausgetauscht, sondern im Inneren des Gehäuses durch einen Wärmetauscher geführt und dort wieder abgekühlt.

Aus der DE 24 55 567 A1 ist eine Kühlwasser-Mengen-regelung für wassergekühlte Drehstrommotoren bekannt, bei der in der Kühlwasserableitung ein Regelventil mit einem Thermoregler und einem Temperaturfühler angeordnet ist.

Aus der GB-A-2 250 063 ist ein Elektromotor mit Ölkühlung bekannt, bei dem eine Steuereinrichtung die Drehzahl und das Austauschdrehmoment des Elektromotors sowie die Temperaturen des Öls, der Spulen, des Motors und der Umgebung erfaßt. Auf der Grundlage dieser Parameter bewirkt die Steuereinrichtung beispielsweise eine Erhöhung der Motordrehzahl wenn die Temperaturen niedrig sind und somit die Viskosität des Öls hoch ist, und verringert die Motordrehzahl wenn die Temperatur ansteigt und die Viskosität des Öls sich verringert. Wenn also der Motor startet, d.h. wenn die Temperatur des Öls niedrig und damit seine Viskosität hoch ist, wird die Drehzahl des Motors erhöht, so daß die Menge des zugeführten Öls sich erhöht, um eine unzureichende Schmierung zu vermeiden.

Des weiteren lehrt dieses Dokument, daß das Ö1 direkt durch die Durchlässe auf das Getriebe geführt wird, so daß die Lager und die Zahnflächen des Getriebes ausreichend geschmiert und gekühlt sind.

Die Erfindung hat die Aufgabe, den Wirkungsgrad der Anordnung insgesamt hoch zu halten und einen Elektromotor mit einer hohen Leistungsdichte bereitzustellen. Zur Lösung dieser Aufgabe wird gemäß der Erfindung der eingangs beschriebene Elektromotor durch die Merkmale des Anspruchs 1 gekennzeichnet.

Durch diese Maßnahme kann der Volumenstrom durch den Elektromotor an die Drehzahl und das Drehmoment so angepaßt werden, daß sowohl die Verlustwärme (bei hohem Drehmomenten) im gewünschten Umfang abgeführt werden kann, indem der Elektromotor als Sprühölmotor oder als Unterölmotor betrieben wird, als auch (bei hohen Drehzahlen) die Bremswirkung des Kühlmittels ausgeschaltet werden kann, indem der Elektromotor (weitgehend) trokken gefahren wird.

Durch die Rotation des Rotors im Betrieb des Elektromotors entsteht bereits eine gewisse Pumpwirkung, die jedoch weitgehend von der Drehzahl des Elektromotors abhängig ist. Um auch bei niedrigen Drehzahlen (und hohen Drehmomenten) eine ausreichende Kühlwirkung zu erreichen, oder wenn die Pumpwirkung des Elektromotors selbst nicht ausreicht, ist es vorteilhaft, wenn die Steuereinrichtung eine Pumpe ansteuert, die das Kühlmittel durch die Kühlmittelzuführung in das Innere des Elektromotors und durch die Kühlmittelabführung aus dem Elektromotor heraus fördert.

Um sicherstellen zu können, daß bei hohen Drehzahlen der Elektromotor auch (weitgehend) trocken, das heißt ohne (oder nur mit geringen Mengen) Kühlmittel betrieben werden kann, ist vorgesehen, daß die Steuereinrichtung ein Ventil ansteuert, durch das der Volumenstrom des Kühlmittels durch die Kühlmittelzuführung in das Innere des Elektromotors und durch die Kühlmittelabführung aus dem Elektromotor heraus unterbrechbar bzw. reduzierbar ist.

Der Ort des Ventils in dem Kühlmittelkreislauf ist unter anderem davon abhängig, ob die Pumpe eine Saug- oder Druckpumpe ist. Entscheidend ist lediglich, daß der Kühlmittelkreislauf durch das Ventil unterbrechbar ist, und daß das Kühlmittel bei unterbrochenem Kühlmittelkreislauf aus dem Innern des Elektromotors herausgepumpt werden kann.

Weiterhin kann ein Reservoir für das Kühlmittel vorgesehen sein, das das Kühlmittel zum Beispiel dann speichert, wenn der Elektromotor trocken läuft.

Schließlich kann zur Abkühlung des im Innern des Elektromotors erwärmten Kühlmittels in dem Kühlmittelkreislauf ein Wärmetauscher in Gestalt eines Radiators vorgesehen sein, der ggf. auch durch ein Gebläse zwangsgekühlt sein kann.

Bei einer bevorzugten Ausführungsform des bürstenlosen Elektromotors reicht die Kühlmittelzuführung im Bereich einer Stirnplatte des Rotors in das Innere des Gehäuses. Dabei ist nicht entscheidend, ob die Durchführung radial oder tangential an dem Rotor bzw. dessen Stirnplatte mündet, sondern lediglich wichtig, daß das zugeführte Kühlmittel - im gefluteten oder im Sprühöl-Betrieb - mit dem Rotor bzw. dessen Stirnplatte im Berührung kommt, um zumindest zum Teil nach außen zu den Statorwicklungen gefördert zu werden.

Wenn das Kühlmittel auf die Stirnplatte des Rotors geleitet wird, ist es für eine anteilige Verteilung des Kühlmittels von Vorteil, wenn die Stirnplatte des Rotors einen Aufnehmer für das Kühlmittel aufweist. Damit kann dann eine Weiterleitung des Kühlmittels zu den wichtigen zu kühlenden Teilen des Elektromotors erfolgen.

Bei einer Ausführungsform des Elektromotors geht die Kühlmittelzuführung zu dem Rotor durch dessen Rotationsachse und mündet in wenigstens zwei zu dem äußeren Umfang des Rotors hinführende Kühlmittelleitungen. Diese Ausgestaltung bietet eine besonders gute Pumpwirkung für das Kühlmittel, da die Pumpleistung vom radialen Weg des Kühlmittels abhängig ist und mit dem Quadrat des Weges anwächst.

Bei einer anderen Ausführungsform des Elektromotors ist vorgesehen, daß der Aufnehmer kreisnutförmig ist und an seiner radial außen liegenden Wandung einen durchgehenden Steg aufweist, dessen freies Ende zu der Rotationsachse des Rotors hinweist. Dieser Steg stellt sicher, daß das Kühlmittel beim Sprühölbetrieb nicht nach vorne (von der Stirnseite des Rotors in Richtung auf die Gehäuseinnenwand) wegfließt, sondern das Kühlmittel für die Kühlung der Teile zur Verfügung steht, die der Kühlung besonders bedürfen.

Zur besonders einfachen Zuführung des Kühlmittels ist vorgesehen, daß die Kühlmittelzuführung gegenüber dem umlaufenden Steg radial nach innen versetzt ist, und der Auslaß der Kühlmittelzuführung den durchgehenden Steg in axialer Richtung zum Grund des Aufnehmers hin überragt.

Wenn der innenliegende Rotor eine glockenförmige Gestalt mit einem freien Innenraum aufweist, ist es vorteilhaft, daß der Aufnehmer im radial außen liegenden Bereich seines Grundes bzw. die Kühlmittelleitungen (im Fall der zentralen Kühlmittelzuführung) jeweils mit wenigstens einem Kühlmittelkanal verbunden sind, der in den Innenraum des Rotors reicht. Damit können auf einfache Weise im Innern des Rotors angeordnete Teile gekühlt werden und durch das Kühlmittel auch gegenüber der Stirnplatte des Rotors zurückgesetzte Teile gekühlt werden.

Um einen sicheren Transport des Kühlmittels aus dem kreisnutförmigen Aufnehmer in andere Bereiche des Elektromotors sicherzustellen, bzw. um eine vollständige Entleerung des Aufnehmers zu ermöglichen, ist es vorgesehen, den Einlaß des Kühlmittelkanales am Grunde des Aufnehmers gegenüber dem Auslaß des Kühlmittelkanales in den Innenraum des Rotors radial nach innen zu versetzen.

Um in der Innenwandung des Rotors ein bestimmtes Volumen an Kühlmittel aufnehmen zu können, das zum einen den Rotor kühlen kann und zum anderen als Vorrat für Kühlmittel dient, das an andere Teile des Elektromotors weitergeleitet werden kann, ist es vorteilhaft, daß der Auslaß des Kühlmittelkanales in den Innenraum des Rotors zumindest gegenüber einem radial erweiterten Wandungsabschnitt des Innenraumes des glockenförmiges Rotor radial nach innen versetzt ist.

Um die Weiterleitung des Kühlmittels aus diesem erweiterten Wandungsabschnitt zu anderen Teilen des Elektromotors zu ermöglichen, weist der erweiterte Wandungsabschnitt des Innenraumes wenigstens einen Kühlmitteldurchlaß zur Außenseite des glockenförmigen Rotors auf.

Damit durch die Fliehkraft das Kühlmittel sich von der Stirnplatte des Rotors auch zu den weiter hinten liegenden Teilen bewegt, ist vorteilhafterweise vorgesehen, daß sich an der der Stirnplatte des Rotors entgegengesetzten Seite des Wandungsabschnittes die Wandung des Innenraumes zum freien Rand des Rotors hin konisch erweitert. Dabei können auch Rillen vorgesehen sein, um bevorzugte Strömungswege für das Kühlmittel an der Innenwand des Rotors festzulegen.

Außerdem kann das Kühlmittel auch in im Innern der Rotorwandung liegenden Kanälen von der Stirnplatte des Rotors zu dessen freiem Ende fließen und dort wieder austreten.

Um das Kühlmittel zu den einen (hinteren) Köpfen der Statorwicklung zu führen, ist vorgesehen, daß sich der freie Rand des Rotors in axialer Richtung bis vor oder zu den einen Köpfen der Statorwicklung erstreckt. Dort wird dann das Kühlmittel den Rotor verlassen und durch Zentrifugalkräfte zu den Köpfen der Statorwicklung geschleudert.

Um das Kühlmittel auch zu den anderen (vorderen) Köpfen der Statorwicklung zu führen, kann vorgesehen sein, daß sich von der der Stirnplatte des Rotors zugewandten Seite des erweiterten Wandungsabschnittes zu der Außenseite des Rotors in axialer Richtung bis vor oder zu den anderen Köpfen der Statorwicklung wenigstens ein Kühlmittelkanal erstreckt.

Eine weitere Möglichkeit, die Statorwickelköpfe zu kühlen, besteht darin, Kühlmittel durch einen Kühlmitteldurchlaß im Bereich des erweiterten Wandungsabschnitts zur Außenseite des Rotors hin zu in der äußeren Mantelfläche eingearbeiteten axial verlaufenden Nuten jeweils bis zu den Kurzschlußringen zu führen. Von dort wird das Kühlmittel durch die Fliehkraft zu den Kurzschlußringen hingeschleudert und kühlt diese. Von den Kurzschlußringen aus wird das Kühlmittel weiter radial nach außen zu den Statorwickelköpfen geschleudert, um auch diese zu kühlen.

Um das Kühlmittel auch zu der Außenseite des Rotors bzw. zu dort angebrachten Teilen (z.B. Rotorkäfig) zu führen, kann vorgesehen sein, daß sich von dem erweiterten Wandungsabschnitt zu der Außenseite des Rotors in radialer Richtung wenigstens ein Kühlmitteldurchlaß erstreckt, durch den Kühlmittel zu an der Außenseite des Rotors angeordneten Stäben des Rotorkäfigs gelangen kann.

Bei einer besonders bevorzugten Ausführungsform des Elektromotors ist in dem freien Innenraum des Rotors zumindest ein Teil eines Getriebes angeordnet. Auf diese Weise wird durch das an der Innenseite des Rotors entlanggeführte Kühlmittel gleichzeitig der dort befindliche Teil des Getriebes gekühlt, was eine besonders einfache, da gekapselte Ausführung des Getriebes bei hoher Leistungsdichte erlaubt.

Insbesondere wenn das Getriebe in einem flüssigkeitsdichten Getriebegehäuse angeordnet ist, das zumindest mit einem Abschnitt der Wandung des Innenraumes des Rotors einen Ringspalt bildet, wird eine sehr gute Kühlung des Getriebes erreicht, da dann das Kühlmittel auch im Sprühölbetrieb zwischen der Innenwandung des Rotors und der Außenwandung des Getriebes zwangsgeführt ist.

Damit kann das Getriebe in dem Getriebegehäuse im wesentlichen vollständig in Getriebeöl getaucht sein. Da das Getriebeöl oftmals reibungsverringernde Zusätze enthält, die sehr aggressiv sind und elektrische Leitungsisolierungen angreifen, und außerdem Getriebeöl oft Metallspäne enthält, die in den Wicklungen des Elektromotors Kurzschlüsse verursachen würden, wäre bei einer Umwälzung und Kühlung des Getriebeöls ein zweiter separater Kühlkreislauf erforderlich. Dieser zweite Kühlkreislauf ist durch die Kühlung des Getriebegehäuses von außen nicht mehr erforderlich.

Ein entscheidender Gesichtspunkt ist also bei der Erfindung, daß das Kühlmittel in Abhängigkeit von der durch den Elektromotor zu erbringenden Drehzahl und dem Drehmoment so zu den jeweiligen Teilen des Elektromotors hingefördert wird, daß eine optimale Kühlung erfolgt, die der momentanen Drehzahl und dem Drehmoment angepaßt ist. Dazu wird das Kühlmittel teilweise direkt und teilweise nacheinander zu den einzelnen Teilen des Elektromotors durch dessen Rotor bzw. die durch diesen hervorgerufene Fliehkraft hingeführt.

Dabei wird der Elektromotor bevorzugt in der Weise betrieben, daß die Steuereinrichtung im Bereich von 0% bis etwa 30% der Dauerdrehzahl und im Bereich von etwa 60% bis etwa 100% des Maximaldrehmomentes des Elektromotors das Verhältnis des durch die Kühlmittelzuführung eingespeisten Volumenstroms des Kühlmittels zu dem durch die Kühlmittelabführung abgeleiteten Volumenstrom des Kühlmittels so einstellt, daß das Gehäuse des Elektromotors vollständig mit Kühlmittel gefüllt ist.

Weiterhin wird durch die Steuereinrichtung sichergestellt, daß im Bereich von 0% bis etwa 100% der Dauerdrehzahl und im Bereich von etwa 10% bis etwa 60% des Maximaldrehmomentes des Elektromotors das Verhältnis des durch die Kühlmittelzuführung eingespeisten Volumenstroms des Kühlmittels zu dem durch die Kühlmittelabführung abgeleiteten Volumenstrom des Kühlmittels so einstellt ist, daß bei im wesentlichen kühlmittelsumpffreien Gehäuse des Elektromotors das Kühlmittel durch die Kühlmittelzuführung in den Aufnehmer einströmt, von dort über den Kühlmittelkanal in den Innenraum des Rotors in dessen radial erweiterten Wandungsabschnitt gelangt, von wo es durch den/die Kühlmittelkanal/kanäle und den Ringspalt zu den Statorköpfen bzw. zu der Außenseite des Rotors (z.B. zu den Stäben des Rotorkäfigs) gelangt.

Schließlich wird durch die Steuereinrichtung erreicht, daß im Bereich von 0% bis etwa 100% der Dauerdrehzahl und im Bereich von etwa 0% bis etwa 10% des Maximaldrehmomentes des Elektromotors kein oder nur geringe Mengen des Kühlmittels in das Gehäuse des Elektromotors einströmen.

Die Erfindung wird nachstehend anhand der Zeichnung erläutert, wobei
- Fig. 1: eine Prinzipschaltung des Elektromotors mit der damit verbundenen Steuereinrichtung zeigt,
- Fig. 2: ein Diagramm der unterschiedlichen Betriebszustände zeigt.
- Fig. 3: einen schematischen Querschnitt durch einen Elektromotor gemäß der Erfindung in einer ersten Ausführungsform zeigt, und
- Fig. 4: einen schematischen Querschnitt durch einen Elektromotor gemäß der Erfindung in einer zweiten Ausführungsform zeigt.

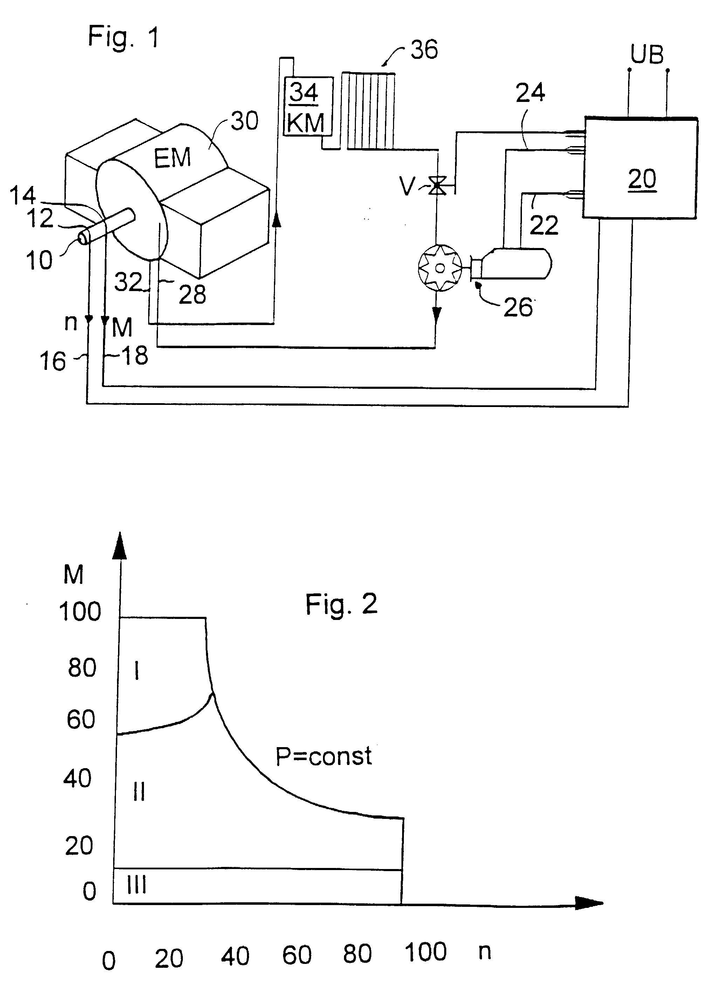

In Fig. 1 ist ein mit EM bezeichneter bürstenloser, als Innenläufer ausgebildeter Elektromotor EM gezeigt, der an seiner Abtriebswelle 10 einen nur schematisch gezeigten ersten Sensor 12 zur Erfassung der Drehzahl (n) und einen ebenfall nur schematisch gezeigten zweiten Sensor 14 zur Erfassung des Drehmomentes (M) aufweist. Die Ausgangssignale des ersten und des zweiten Sensors 12, 14 werden über die Leitungen 16, 18 einer Steuereinrichtung 20 zugeführt.

Die Steuereinrichtung 20 steuert über zwei Leitungen 22, 24 eine Pumpe 26 an, die in einen Kühlmittelkreislauf eingeschaltet ist, der aus einer Kühlmittelzuführung 28, die in ein flüssigkeitsdichtes Gehäuse 30 des Elektromotors EM führt, einer aus dem Gehäuse 30 herausführenden Kühlmittelabführung 32, einem Kühlmittelreservoir 34 und einem Radiator 36 gebildet ist. Um den Kühlmittelkreislauf unterbrechen zu können, ist vor der Pumpe 26 ein ebenfalls durch die Steuereinrichtung 20 ansteuerbares Absperrventil V in den Kühlmittelkreislauf eingeschaltet.

Die Steuereinrichtung 20 wird durch die Betriebsspannung UB gespeist und ist entweder durch eine fest verdrahtete Schaltung oder durch einen entsprechend programmierten Microprozessor mit der erforderlichen Peripherie (Analog/ Digitalwandler für die Sensorsignale, Leistungstreiber für die Pumpe und das Ventil, Daten- und Programmspeicher etc.) realisiert.

In Fig. 2 ist veranschaulicht, wie die Steuereinrichtung 20 in Abhängigkeit von der Drehzahl (n) und dem Drehmoment (M) den Kühlmittelkreislauf steuert. Die Abszisse bzw. Ordinate ist jeweils in Prozent der Dauerdrehzahl bzw. des Maximaldrehmomentes bemaßt.

Durch die Steuereinrichtung 20 wird im Bereich von 0% bis etwa 30% der Dauerdrehzahl und im Bereich von etwa 60% bis etwa 100% des Maximaldrehmomentes des Elektromotors das Verhältnis des durch die Kühlmittelzuführung 28 eingespeisten Volumenstromes des Kühlmittels KM zu dem durch die Kühlmittelabführung 32 abgeleiteten Volumenstrom des Kühlmittels KM so eingestellt, daß das Gehäuse 30 des Elektromotors EM vollständig mit Kühlmittel KM gefüllt ist. Dieser Bereich ist in dem Diagramm mit I bezeichnet.

Weiterhin steuert die Steuereinrichtung 20 im Bereich von 0% bis etwa 100% der Dauerdrehzahl und im Bereich von etwa 10% bis etwa 60% des Maximaldrehmomentes des Elektromotors EM das Verhältnis des durch die Kühlmittelzuführung 28 eingespeisten Volumenstromes des Kühlmittels KM zu dem durch die Kühlmittelabführung 32 abgeleiteten Volumenstrom des Kühlmittels KM so, daß bei im wesentlichen kühlmittelsumpffreien Gehäuse 30 des Elektromotors EM das Kühlmittel KM durch die Kühlmittelzuführung 28 in das Innere des Gehäuses 30 einströmt, dort die zu kühlenden Teile des Elektromotors EM kühlt, und dann das Gehäuse 30 des Elektromotors EM durch die Kühlmittelabführung 32 wieder verläßt. Dieser Bereich ist in dem Diagramm mit II bezeichnet.

Der Verlauf des Weges, den das Kühlmittel KM im Innern des Gehäuse 30 des Elektromotors EM im einzelnen nimmt, wird weiter unten im Zusammenhang mit der Beschreibung des Elektromotors EM selbst erläutert.

Schließlich wird durch die Steuereinrichtung die Pumpe 26 und das Ventil V so angesteuert, daß im Bereich von 0% bis etwa 100% der Dauerdrehzahl und im Bereich von etwa 0% bis etwa 10% des Maximaldrehmomentes des Elektromotors EM kein Kühlmittel KM in das Gehäuse 30 des Elektromotors EM einströmt und daß dieser trocken läuft. Dieser Bereich ist in dem Diagramm mit III bezeichnet.

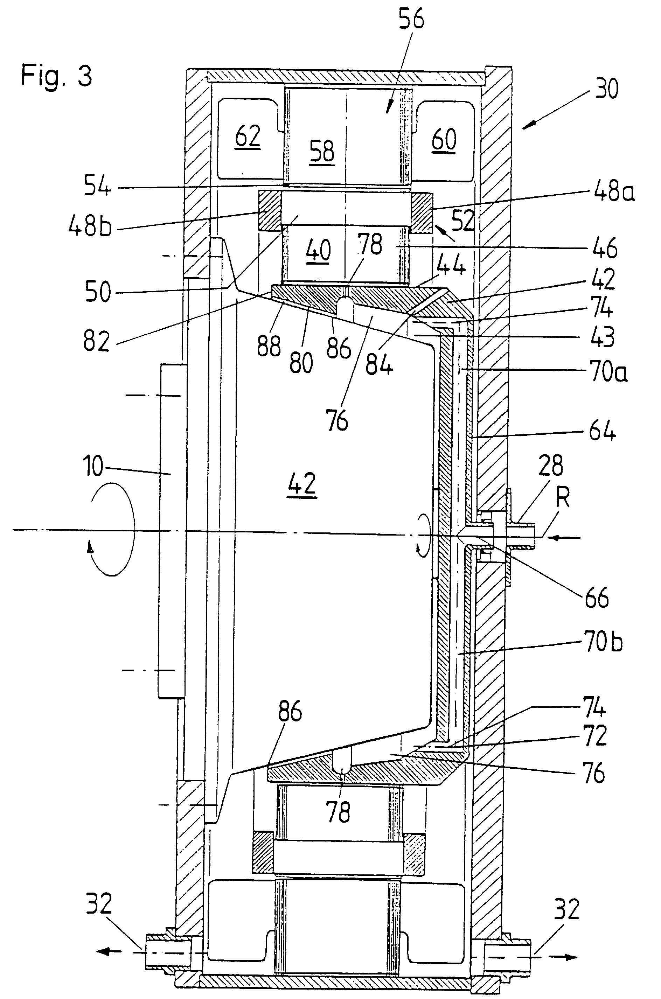

Fig. 3 zeigt eine erste Ausführungsform des Elektromotors. Im Innern des Gehäuses 30 ist ein innenlaufender Rotor 40 drehbar gelagert, der - über ein nicht weiter erläutertes drehzahluntersetzendes Getriebe 42 - mit der Abtriebswelle 10 verbunden ist. Der Rotor 40 hat die Form einer Glocke, in deren Innerem 43 das Getriebe 42 zumindest teilweise untergebracht ist. An seiner äußeren Mantelfläche 44 trägt der Rotor 40 ein Läuferblechpaket 46, das durch einen aus zwei axial beabstandeten Kurzschlußringen 48a, 48b und diese verbindende Kupferstäbe 50 gebildeten Käfig 52 zusammengehalten ist. Zu dem Rotor ist unter Bildung eines Ringspaltes 54 in radialem Abstand ein Statorpaket 56 angeordnet. Das Statorpaket besteht aus einem Blechpaket 58 sowie Statorwicklungen, deren Wickelköpfe 60, 62 an beiden Stirnseiten des Blechpaketes 58 überstehen.

In der Rotationsachse R ist auf der der Abtriebswelle 10 entgegengesetzten Stirnseite des Gehäuses 30 des Elektromotors EM die Kühlmittelzuführung 28 angeordnet. Bei dieser Ausführungsform weist die Stirnplatte 64 des Rotors 64 eine Durchführung 66 für das Kühlmittel KM auf. Von der Durchführung 66 gehen - aus Gründen der Symmetrie - wenigstens zwei zu dem äußeren Umfang des Rotors 40 hinführende Kühlmittelleitungen 70a, 70b weg.

Die Kühlmittelleitungen 70a, 70b sind jeweils mit wenigstens einem Kühlmittelkanal 74 verbunden, der in den Innenraum 43 des Rotors 40 reicht.

Der Auslaß der Kühlmittelkanäle 74 in den Innenraum 43 des Rotors 43 ist zumindest gegenüber einem radial erweiterten Wandungsabschnitt 76 des Innenraumes 43 des glockenförmigen Rotors 40 radial nach innen versetzt. Damit kann sich in dem erweiterten Wandungsabschnitt 76 das Kühlmittel KM gleichmäßig verteilen.

Der erweiterte Wandungsabschnitt 76 des Innenraumes 43 weist mehrere entlang des Umfangs des Rotors 40 gleichmäßig verteilte Kühlmitteldurchlässe 78 und (nicht veranschaulichte) Nuten zur Außenseite 44 des glockenförmigen Rotors 40 hin auf, durch die das Kühlmittel KM nach außen gelangen kann (Rotorkühlung).

Von dem erweiterten Wandungsabschnitt 76 kann Kühlmittel KM, das nicht durch die Kühlmitteldurchlässe 78 nach außen strömt, von dem erweiterten Wandungsabschnitt 76 aus entlang der inneren Wandung 80 des Rotors 40 zum freien Rand 82 des Rotors 40 hin strömen. Dies wird dadurch ermöglicht, daß sich an der der Stirnplatte 64 des Rotors 40 entgegengesetzten Seite des Wandungsabschnittes 76 die Wandung 80 des Innenraumes 43 konisch erweitert (Getriebekühlung).

Der freie Rand 82 des Rotors 40 erstreckt sich bei der gezeigten Ausführungsform in axialer Richtung bis vor oder zu den einen Köpfen 62 der Statorwicklung.

Von der der Stirnplatte 64 des Rotors 40 zugewandten Seite des erweiterten Wandungsabschnittes 76 zu der Außenseite 44 des Rotors 40 in axialer Richtung bis vor oder zu den anderen Köpfen 60 der Statorwicklung können sich ebenfalls mehrere Kühlmittelkanäle 84 erstrecken, die in gleicher Weise wie die Kühlmitteldurchlässe 78 entlang des Umfangs des Rotors 40 verteilt sind. Damit können auch die anderen Köpfe 60 der Statorwicklung gekühlt werden. Anstatt aus dem erweiterten Wandungsabschnitt 76 abzugehen, können diese Kühlmittelkanäle 84 auch Verlängerungen der Kanäle 70a, 70b sein. Allerdings sind die Kühlmitteldurchlässe 84 dann entbehrlich, wenn von dem erweiterten Wandungsabschnitt 76 eine ausreichende Menge Kühlmittel KM durch die Kühlmitteldurchlässe 78 nach außen strömt, sich auch in (nicht gezeigten) axialen Nuten entlang der Mantelfläche des Rotors in Richtung der Kurzschlußringe des Rotors bewegt, zu diesen durch die Fliehkraft hingeschleudert und von dort zu den Statorwicklungsköpfen geschleudert wird.

Außerdem werden durch das Kühlmittel KM, das von dem freien Rand 82 des Rotors 40 in Richtung der Köpfe 60 der Statorwicklung geschleudert wird, bzw. durch das Kühlmittel KM, das von den Kühlmittelkanälen 84 in Richtung der Köpfe 62 der Statorwicklung geschleudert wird, auch die jeweiligen Kurzschlußringe 48a, 48b gekühlt.

Die Kühlmitteldurchlässe 78 ermöglichen hingegen, daß das Kühlmittel KM zu den Kupferstäben 50 des Käfigs gelangen kann, um diese zu kühlen.

Wie bereits erwähnt, ist in dem freien Innenraum 43 des Rotors 40 zumindest ein Teil des Getriebes 42 angeordnet. Das Getriebe 42 ist in einem flüssigkeitsdichten Getriebegehäuse 86 angeordnet, das mit einem Abschnitt der Wandung 80 des Innenraumes 43 des Rotors 40 einen Ringspalt 88 bildet.
Auf diese Weise wird das Getriebe 42 von außen durch das Kühlmittel KM gekühlt, so daß das Getriebe 42 in dem Getriebegehäuse 86 gekapselt und im wesentlichen vollständig in Getriebeöl versenkt sein kann.

Im äußeren unteren Bereich des Gehäuses 30 des Elektromotors EM sind an dessen beiden Stirnseiten Kühlmittelabführungen 32, 32' vorgesehen, durch die das erwärmte Kühlmittel KM den Elektromotor wieder verläßt, um abgekühlt zu werden.

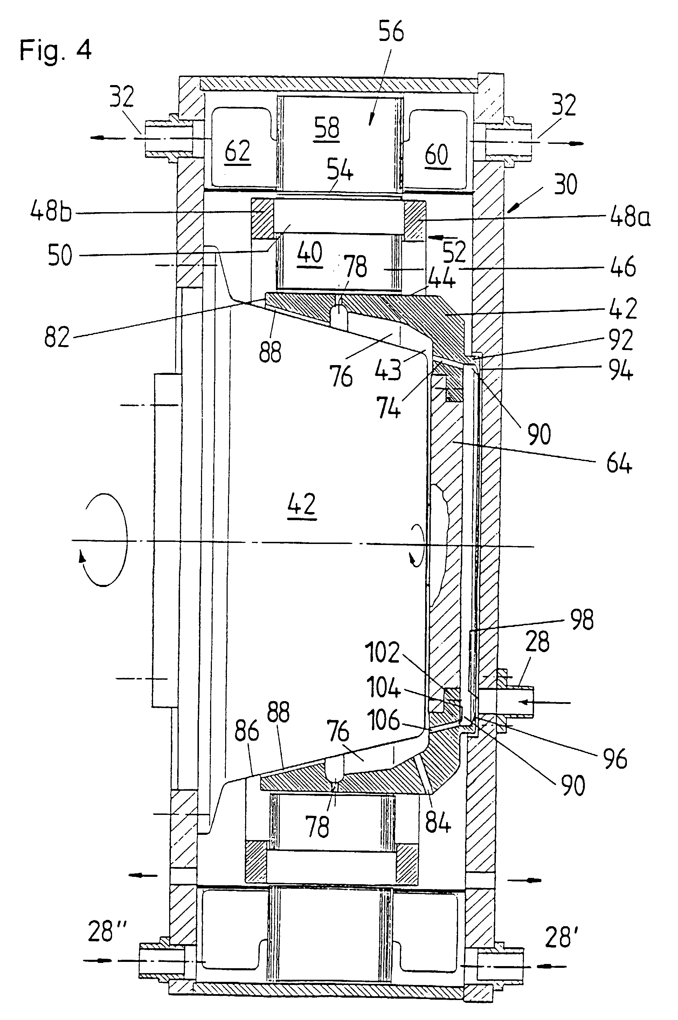

In der Ausführungsform gemäß Fig. 4 sind gegenüber Fig. 3 zwei wesentliche Änderungen insofern vorgenommen, als hier die Kühlmittelzuführung 28 außermittig angeordnet ist und außerdem weitere Kühlmittelzuführungen 28', 28" vorhanden sind, um die Köpfe 60, 62 der Statorwicklung getrennt zu kühlen. Diese Variante hat den Vorteil, daß insbesondere bei zähem Kühlmittel (z.B. wegen niedriger Umgebungstemperatur) sichergestellt ist, daß trotz seiner Zähigkeit die Köpfe 60, 62 der Statorwicklung gekühlt werden, obwohl durch die Kühlmitteldurchlässe 78, 84 und vom freien Rand 82 des Rotors 40 noch nicht ausreichend Kühlmittel KM zu den Köpfe 60, 62 der Statorwicklung hin gelangt. Außerdem kann durch diese Ausführungsform eine unabhängige Kühlung des Stators und des Rotors erfolgen. Schließlich wird so erreicht, daß nur geringere Mengen bei höheren Drehzahlen aus dem Innern des Rotors gepumpt werden müssen.

Die Kühlmittelzuführung 28 könnte auch hier zentrisch angeordnet sein.

Außerdem ist die Durchführung 66 für die Kühlmittelzuführung 28 in Fig. 3 relativ aufwendig, was bei der Ausführungsform gemäß Fig. 4 einfacher gelöst ist.

Im übrigen sind gleiche Teile wie in Fig. 3 auch mit den gleichen Bezugszeichen versehen und werden nachstehend nicht nochmals erläutert.

Die Stirnplatte 64 des Rotors weist einen Aufnehmer 90 für das Kühlmittel KM auf. Der Aufnehmer 90 ist kreisnutförmig ausgestaltet und weist an seiner radial außenliegenden Wandung 92 einen durchgehenden Steg 94 auf, dessen freies Ende 96 zur Rotationsachse R hinweist.

Die Kühlmittelzuführung 28 ist gegenüber dem umlaufenden Steg 94 bzw. dessen freiem Ende 96 radial nach innen versetzt, und der Auslaß 98 der Kühlmittelzuführung 28 kann den durchgehenden Steg 94 bzw. dessen freies Ende 96 in axialer Richtung zum Grund 102 des Aufnehmers 90 hin überragen. Der Einlaß 104 des Kühlmittelkanales 74 am Grunde 104 des Aufnehmers 90 ist gegenüber dem Auslaß 106 des Kühlmittelkanales 74 in den Innenraum 43 des Rotors 40 radial nach innen versetzt. Außerdem ist der Auslaß 106 des Kühlmittelkanales 74 in den Innenraum 43 des Rotors 40 gegenüber einem radial erweiterten Wandungsabschnitt 76 des Innenraumes 43 des Rotors 40 radial nach innen versetzt.

Der weitere Weg des Kühlmittels KM ist im übrigen gleich wie bei der Ausführungsform nach Fig. 3.

## Patentansprüche

1. Bürstenloser Elektromotor mit
- einem flüssigkeitsdichten Gehäuse (30),
- einem innenlaufenden Rotor (40), der mit einer Abtriebswelle (10) verbunden ist,
- einem zu dem Rotor (40) in radialem Abstand angeordneten Statorpaket (56),
- einer in das Innere des Gehäuses (30) führenden Kühlmittelzuführung (28),
- einer aus dem Gehäuse (30) herausführenden Kühlmittelabführung (32), und
- einer den durch das Innere des Gehäuses (30) fließenden Volumenstrom des Kühlmittels (KM) drehzahl- und drehmomentabhängig einstellende Steuereinrichtung (20),
dadurch gekennzeichnet, daß
- die Steuereinrichtung im Bereich von 0% bis etwa 30% der Dauerdrehzahl und im Bereich von etwa 60% bis etwa 100% des Maximaldrehmomentes des Elektromotors das Verhältnis des durch die Kühlmittel zuführung eingespeisten Volumenstrom des Kühlmittels zu dem durch die Kühlmittelabführung abgeleiteten Volumenstrom des Kühlmittels so einstellt, daß das Gehäuse des Elektromotors vollständig mit Kühlmittel gefüllt ist, und
- die Steuereinrichtung im Bereich von 0% bis etwa 100% der Dauerdrehzahl und im Bereich von etwa 0% bis etwa 10% des Maximaldrehmomentes des Elektromotors das Verhältnis des durch die Kühlmittelzuführung eingespeisten Volumenstroms des Kühlmittels zu dem durch die Kühlmittelabführung abgeleiteten Volumenstrom des Kühlmittels so einstellt, daß kein oder nur geringe Mengen von Kühlmittel in das Gehäuse des Elektromotors einströmen.

2. Bürstenloser Elektromotor nach Anspruch 1, dadurch gekennzeichnet, daß
- die Steuereinrichtung (20) eine Pumpe (26) ansteuert, die das Kühlmittel (KM) durch die Kühlmittelzuführung (28) in das Innere des Elektromotors (EM) und durch die Kühlmittelabführung (32) aus dem Elektromotor (EM) heraus fördert.

3. Bürstenloser Elektromotor nach Anspruch 1 oder 2, dadurch gekennzeichnet, daß
- die Steuereinrichtung (20) ein Ventil (V) ansteuert, durch das der Volumenstrom des Kühlmittels (KM) durch die Kühlmittelzuführung (28) in das Innere des Elektromotors (EM) und durch die Kühlmittelabführung (32) aus dem Elektromotor (EM) heraus unterbrechbar ist.

4. Bürstenloser Elektromotor nach einem der vorherigen Ansprüche, dadurch gekennzeichnet, daß
- die Kühlmittelzuführung (28) im Bereich einer Stirnplatte (64) des Rotors (40) in das Innere des Gehäuses (30) reicht.

5. Bürstenloser Elektromotor nach dem vorherigen Anspruch, dadurch gekennzeichnet, daß
- die Stirnplatte (64) des Rotors (40) einen Aufnehmer (90) für das Kühlmittel (KM) aufweist.

6. Bürstenloser Elektromotor nach dem vorherigen Anspruch, dadurch gekennzeichnet, daß
- die Kühlmittelzuführung (28) zu dem Rotor (40) durch dessen Rotationsachse (R) geht und in wenigstens zwei zu dem äußeren Umfang des Rotors (40) hinführende Kühlmittelleitungen (70a, 70b) mündet.

7. Bürstenloser Elektromotor nach Anspruch 5, dadurch gekennzeichnet, daß
- der Aufnehmer (90) kreisnutförmig ausgestaltet ist und an seiner radial außenliegenden Wandung (92) einen durchgehenden Steg (94) aufweist, dessen freies Ende (96) zur Rotationsachse (R) des Rotors (40) hinweist.

8. Bürstenloser Elektromotor nach wenigstens einem der vorherigen Ansprüche, dadurch gekennzeichnet, daß
- die Kühlmittelzuführung (28) gegenüber dem umlaufenden Steg (94) radial nach innen versetzt ist, und
- der Auslaß (98) der Kühlmittelzuführung (28) den durchgehenden Steg (96) in axialer Richtung zum Grund (102) des Aufnehmers (90) hin überragt.

9. Bürstenloser Elektromotor nach wenigstens einem der vorherigen Ansprüche, dadurch gekennzeichnet, daß
- der Rotor (40) eine glockenförmige Gestalt mit einem freien Innenraum (43) aufweist.

10. Bürstenloser Elektromotor nach wenigstens einem der vorherigen Ansprüche, dadurch gekennzeichnet, daß
- der Aufnehmer (90) im radial außen liegenden Bereich seines Grundes (102) bzw. die Kühlmittelleitungen (70a, 70b) jeweils mit wenigstens einem Kühlmittelkanal (74) verbunden sind, der in den Innenraum (43) des Rotors (40) reicht.

11. Bürstenloser Elektromotor nach wenigstens einem der vorherigen Ansprüche, dadurch gekennzeichnet, daß
- der Einlaß (104) des Kühlmittelkanales (74) am Grunde (104) des Aufnehmers (90) gegenüber dem Auslaß (106) des Kühlmittelkanales (74) in den Innenraum (43) des Rotors (40) radial nach innen versetzt ist.

12. Bürstenloser Elektromotor nach wenigstens einem der vorherigen Ansprüche, dadurch gekennzeichnet, daß
- der Auslaß (106) des Kühlmittelkanales (74) in den Innenraum (43) des Rotors (40) zumindest gegenüber einem radial erweiterten Wandungsabschnitt (76) des Innenraumes (43) des Rotors (40) radial nach innen versetzt ist.

13. Bürstenloser Elektromotor nach wenigstens einem der vorherigen Ansprüche, dadurch gekennzeichnet, daß
- der erweiterte Wandungsabschnitt (76) des Innenraumes (43) wenigstens einen Kühlmitteldurchlaß (78) zur Außenseite (44) des Rotors (40) aufweist.

14. Bürstenloser Elektromotor nach wenigstens einem der vorherigen Ansprüche, dadurch gekennzeichnet, daß
- sich an der der Stirnplatte (64) des Rotors (40) entgegengesetzten Seite des erweiterten Wandungsabschnittes (76) die Wandung (80) des Innenraumes (43) zum freien Rand (82) des Rotors (40) hin konisch erweitert.

15. Bürstenloser Elektromotor nach wenigstens einem der vorherigen Ansprüche, dadurch gekennzeichnet, daß
- sich der freie Rand (82) des Rotors (40) in axialer Richtung bis vor oder zu den einen Köpfen (62) der Statorwicklung (56) erstreckt.

16. Bürstenloser Elektromotor nach wenigstens einem der vorherigen Ansprüche, dadurch gekennzeichnet, daß
- sich von der der Stirnplatte (64) des Rotors (40) zugewandten Seite des erweiterten Wandungsabschnittes (76) zu der Außenseite des Rotors (44) in axialer Richtung bis vor oder zu den anderen Köpfen (60) der Statorwicklung (56) wenigstens ein Kühlmittelkanal (84) erstreckt.

17. Bürstenloser Elektromotor nach wenigstens einem der vorherigen Ansprüche, dadurch gekennzeichnet, daß
- sich von dem erweiterten Wandungsabschnitt (76) zu der Außenseite (44) des Rotors (40) in radialer Richtung wenigstens ein Kühlmitteldurchlaß (78) erstreckt, durch den Kühlmittel (KM) zu an der Außenseite des Rotors angeordneten Stäben (50) eines Rotorkäfigs (52) gelangen kann.

18. Bürstenloser Elektromotor nach wenigstens einem der vorherigen Ansprüche, dadurch gekennzeichnet, daß
- in dem freien Innenraum (43) des Rotors (40) zumindest ein Teil eines Getriebes (42) angeordnet ist.

19. Bürstenloser Elektromotor nach wenigstens einem der vorherigen Ansprüche, dadurch gekennzeichnet, daß
- das Getriebe (42) in einem flüssigkeitsdichten Getriebegehäuse (86) angeordnet ist, das zumindest mit einem Abschnitt (80) der Wandung des Innenraumes (43) des Rotors (40) einen Ringspalt (88) bildet.

20. Bürstenloser Elektromotor nach wenigstens einem der vorherigen Ansprüche, dadurch gekennzeichnet, daß
- das Getriebe (42) in dem Getriebegehäuse (86) gekapselt ist und im wesentlichen vollständig in Getriebeöl getaucht ist.

21. Verfahren zum Betrieb eines bürstenlosen Elektromotors mit den Merkmalen wenigstens eines der vorherigen Ansprüche, dadurch gekennzeichnet, daß
- die Steuereinrichtung im Bereich von 0% bis etwa 100% der Dauerdrehzahl und im Bereich von etwa 10% bis etwa 60% des Maximaldrehmomentes des Elektromotors das Verhältnis des durch die Kühlmittelzuführung eingespeisten Volumenstrom des Kühlmittels zu dem durch die Kühlmittelabführung abgeleiteten Volumenstrom des Kühlmittels so einstellt, daß bei im wesentlichen kühlmittelsumpffreien Gehäuse des Elektromotors das Kühlmittel durch die Kühlmittelzuführung in den Aufnehmer bzw. die radial verlaufenden Kühlmittelkanäle einströmt, von dort über den Kühlmittelkanal in den Innenraum des Rotors in dessen radial erweiterten Wandungsabschnitt gelangt, von wo es durch den/die Kühlmittelkanal/kanäle und den Ringspalt zu den Statorköpfen bzw. zu der Außenseite des Rotors gelangt.

## Claims

1. A brushless electric motor with
- a fluid-tight housing (30),
- an internally rotating rotor (40) which is connected with an output shaft (10),
- a stator core (56) arranged at a radial distance from the rotor (40),
- a coolant feeder (28) leading into the interior of the housing (30),
- a coolant outlet (32) leading out of the housing (30), and
- a control means (20) for adjusting the volumetric flow of a coolant (KM) through the interior of the housing (30) as a function of speed and torque,
characterized in that
- in the range from 0% to approx. 30% of the continuous speed and in the range from approx. 60% to approx. 100% of the maximum torque of the electric motor the control means adjusts the ratio between the volumetric flow of the coolant supplied through the coolant feeder and the volumetric flow of the coolant discharged through the coolant outlet so that the housing of the electric motor is completely filled with coolant, and
- in the range from 0% to approx. 100% of the continuous speed and in the range from approx. 0% to approx. 10% of the maximum torque of the electric motor the control means adjusts the ratio between the volumetric flow supplied through the coolant feeder and the volumetric flow of the coolant discharged through the coolant outlet so that no or only small quantities of coolant flow into the housing of the electric motor.

2. A brushless electric motor according to Claim 1, characterized in that
- the control means (20) drives a pump (26) which delivers the coolant (KM) through the coolant feeder (28) into the interior of the electric motor (EM) and through the coolant outlet (32) out of the electric motor (EM).

3. A brushless electric motor according to Claim 1 or 2, characterized in that
- the control means (20) drives a valve (V) by means of which the volumetric flow of the coolant (KM) through the coolant feeder (28) into the interior of the electric motor (EM) and through the coolant outlet (32) out of the electric motor (EM) can be interrupted.

4. A brushless electric motor according to one of the previous claims, characterized in that
- the coolant feeder (28) reaches into the interior of the housing (30) in the area of a face plate (64) of the rotor (40).

5. A brushless electric motor according to the previous claim, characterized in that
- the face plate (64) of the rotor (40) comprises a pick-up (90) for the coolant (KM).

6. A brushless electric motor according to the previous claim, characterized in that
- the coolant feeder (28) leads to the rotor (40) through its axis of rotation (R) and opens into at least two coolant lines (70a, 70b) leading to the outer circumference of the rotor (40).

7. A brushless electric motor according to Claim 5, characterized in that
- the pick-up (90) is shaped as a circular recess and comprises a continuous web (94) at its radial outer wall (92), the free end (96) of which extends toward the axis of rotation (R) of the rotor (40).

8. A brushless electric motor according to at least one of the previous claims, characterized in that
- the coolant feeder (28) is offset radially inward relative to the continuous web (96), and
- an outlet (98) of the coolant feeder (28) projects over the continuous web (96) in an axial direction toward a bottom (102) of the pick-up (90).

9. A brushless electric motor according to at least one of the previous claims, characterized in that
- the rotor (40) has a bell-shaped configuration with a free internal space (43).

10. A brushless electric motor according to at least one of the previous claims, characterized in that
- the pick-up (90) with the radial outer area of its bottom (102) or the coolant lines (70a, 70b), respectively, are connected with at least one coolant duct (74) each which leads into the inner space (43) of the rotor (40).

11. A brushless electric motor according to at least one of the previous claims, characterized in that
- the inlet (104) of the coolant duct (74) on the bottom (104) of the pick-up (90) is offset radially inward into the inner space (43) of the rotor (40) with respect to the outlet (106) of the coolant duct (74).

12. A brushless electric motor according to at least one of the previous claims, characterized in that
- the outlet (106) of the coolant duct (74) into the inner space (43) of the rotor (40) is radially offset in an inward direction at least with respect to a radially expanded wall section (76) of the inner space (43) of the rotor (40).

13. A brushless electric motor according to at least one of the previous claims, characterized in that
- the expanded wall section (76) of the inner space (43) comprises at least one coolant passage (78) to the outer surface (44) of the rotor (40).

14. A brushless electric motor according to at least one of the previous claims, characterized in that
- the wall (80) of the inner space (43) at the side opposite the face plate (64) of the rotor (40) expands conically toward the free edge (82) of the rotor (40).

15. A brushless electric motor according to at least one of the previous claims, characterized in that
- the free edge (82) of the rotor (40) extends in axial direction up to in front of or directly up to the one heads (62) of the stator winding (56).

16. A brushless electric motor according to at least one of the previous claims, characterized in that
- at least one coolant duct (84) extends from the side of the expanded wall section (76) facing toward the face plate (64) of the rotor (40) to the outer surface (44) of the rotor in axial direction up to in front of or directly up to the other heads (60) of the stator winding (56).

17. A brushless electric motor according to at least one of the previous claims, characterized in that
- at least one coolant passage (78) extends from the expanded wall section (76) in radial direction to the outer surface (44) of the rotor (40), through which coolant (KM) can reach bars (50) of a rotor cage (52), which are arranged at the outer surface of the rotor.

18. A brushless electric motor according to at least one of the previous claims, characterized in that
- at least part of a gear (42) is arranged in the free inner space (43) of the rotor (40).

19. A brushless electric motor according to at least one of the previous claims, characterized in that
- the gear (42) is arranged in a fluid-tight gearbox (86) which together with at least a section (80) of the wall of the inner space (43) of the rotor (40) forms an annular gap (88).

20. A brushless electric motor according to at least one of the previous claims, characterized in that
- the gear (42) is encapsulated in the gearbox (86) and submerged essentially completely in gear oil.

21. A method for operating a brushless electric motor with the characteristics of at least one of the previous claims, characterized in that
- in the range from 0% to approx. 100% of the continuous speed and in the range from approx. 10% to approx. 60% of the maximum torque of the electric motor the control means adjusts the ratio between the volumetric flow supplied through the coolant feeder and the volumetric flow of the coolant discharged through the coolant outlet so that with an essentially coolant sump-free housing of the electric motor, the coolant flows through the coolant feeder into the pick-up or into the radially extending cooland ducts, respectively, from where it reaches the inner space of the rotor in its radially expanded wall section via the coolant duct, and then flows through the coolant duct(s) and the annular gap to the stator heads or the outside of the rotor, respectively.

## Revendications

1. Moteur électrique sans balai, comportant
- un carter (30) étanche aux liquides,
- un rotor (40) tournant à l'intérieur qui est relié à un arbre mené (10),
- un empilage de stator (56) agencé à distance radiale du rotor (40),
- une conduite d'amenée de réfrigérant (28) menant à l'intérieur du carter (30),
- une conduite d'évacuation de réfrigérant (32) menant hors du carter (30), et
- un dispositif de commande (20) qui règle, en fonction de la vitesse de rotation et du couple de rotation, le courant volumique du réfrigérant (KM) qui s'écoule à travers l'intérieur du carter (30),
caractérisé en ce que
- le dispositif de commande règle, dans la plage de 0 % à environ 30 % de la vitesse de rotation permanente et dans la plage d'environ 60 % à environ 100 % du couple de rotation maximum du moteur électrique, la relation entre le courant volumique de réfrigérant alimenté par la conduite d'amenée de réfrigérant et le courant volumique de réfrigérant évacué par la conduite d'évacuation de réfrigérant, de telle sorte que le carter du moteur électrique est complètement rempli avec le réfrigérant, et
- le dispositif de commande règle, dans la plage de 0 % à environ 100 % de la vitesse de rotation permanente et dans la plage d'environ 0% à environ 10 % du couple de rotation maximum du moteur électrique, la relation entre le courant volumique de réfrigérant alimenté par la conduite d'amenée de réfrigérant et le courant volumique de réfrigérant évacué par la conduite d'évacuation de réfrigérant, de telle sorte qu'aucun réfrigérant ou uniquement une faible quantité de réfrigérant s'écoule dans le carter du moteur électrique.

2. Moteur électrique sans balai selon la revendication 1, caractérisé en ce que le dispositif de commande (20) pilote une pompe (26) qui refoule le réfrigérant (KM) à travers la conduite d'amenée de réfrigérant (28) dans l'intérieur du moteur électrique (EM) et à travers la conduite d'évacuation de réfrigérant (32) hors du moteur électrique (EM).

3. Moteur électrique sans balai selon l'une ou l'autre des revendications 1 et 2, caractérisé en ce que le dispositif de commande (20) pilote une vanne (V) par laquelle le courant volumique du réfrigérant (KM) à travers la conduite d'amenée de réfrigérant (28) dans l'intérieur du moteur électrique (EM) et le courant volumique du réfrigérant (KM) à travers la conduite d'évacuation de réfrigérant (32) hors du moteur électrique (EM) peuvent être interrompus.

4. Moteur électrique sans balai selon l'une quelconque des revendications précédentes, caractérisé en ce que la conduite d'amenée de réfrigérant (28) dans la zone d'une plaque frontale (64) du rotor (40) s'étend jusque dans l'intérieur du carter (30).

5. Moteur électrique sans balai selon la revendication précédente, caractérisé en ce que la plaque frontale (64) du rotor (40) comprend un récepteur (90) pour le réfrigérant (KM).

6. Moteur électrique sans balai selon la revendication précédente, caractérisé en ce que la conduite d'amenée de réfrigérant (28) s'étend vers le rotor (40) à travers son axe de rotation (R) et débouche dans au moins deux conduites à réfrigérant (70a, 70b) menant vers la périphérie extérieure du rotor (40).

7. Moteur électrique sans balai selon la revendication 5, caractérisé en ce que le récepteur (90) est réalisé en forme de gorge circulaire et comprend une traverse continue (94) sur sa paroi radialement extérieure (92), dont l'extrémité libre (96) est dirigée vers l'axe de rotation (R) du rotor (40).

8. Moteur électrique sans balai selon l'une au moins des revendications précédentes, caractérisé en ce que la conduite d'amenée de réfrigérant (28) est décalée radialement vers l'intérieur par rapport à la traverse continue (94), et en ce que la sortie (98) de la conduite d'amenée de réfrigérant (28) dépasse la traverse continue (94) en direction axiale jusqu'au fond (102) du récepteur (90).

9. Moteur électrique sans balai selon l'une au moins des revendications précédentes, caractérisé en ce que le rotor (40) présente une configuration en forme de cloche avec un espace intérieur libre (43).

10. Moteur électrique sans balai selon l'une au moins des revendications précédentes, caractérisé en ce que le récepteur (90) est relié dans la zone radialement extérieure de son fond (102), ou bien les conduites à réfrigérant (70a, 70b) sont reliées, à au moins un canal de réfrigérant (74) qui s'étend jusque dans l'espace intérieur (43) du rotor (40).

11. Moteur électrique sans balai selon l'une au moins des revendications précédentes, caractérisé en ce qu'au fond (102) du récepteur (90), l'entrée (104) du canal de réfrigérant (74) est décalée radialement vers l'intérieur par rapport à la sortie (106) du canal de réfrigérant (74), dans l'espace intérieur (43) du rotor (40).

12. Moteur électrique sans balai selon l'une au moins des revendications précédentes, caractérisé en ce que la sortie (106) du canal de réfrigérant (74) est décalée radialement vers l'intérieur dans l'espace intérieur (43) du rotor (40) du moins par rapport à un secteur de paroi radialement élargi (76) de l'espace intérieur (43) du rotor (40).

13. Moteur électrique sans balai selon l'une au moins des revendications précédentes, caractérisé en ce que le secteur de paroi élargi (76) de l'espace intérieur (43) comprend au moins un passage de réfrigérant (78) vers le côté extérieur (44) du rotor (40).

14. Moteur électrique sans balai selon l'une au moins des revendications précédentes, caractérisé en ce que, sur le côté du secteur de paroi élargi (76) opposé à la plaque frontale (64) du rotor (40), la paroi (80) de l'espace intérieur (43) s'élargit coniquement vers le bord libre (82) du rotor (40).

15. Moteur électrique sans balai selon l'une au moins des revendications précédentes, caractérisé en ce que le bord libre (82) du rotor (40) s'étend en direction radiale jusqu'en avant ou jusqu'aux têtes (62) de l'enroulement de stator (56).

16. Moteur électrique sans balai selon l'une au moins des revendications précédentes, caractérisé en ce qu'au moins un canal de réfrigérant (84) s'étend depuis le côté du secteur de paroi élargi (76), orienté vers la plaque frontale (64) du rotor (40), vers le côté extérieur du rotor (44), en direction axiale jusqu'en avant ou jusqu'aux autres têtes (60) de l'enroulement de stator (56).

17. Moteur électrique sans balai selon l'une au moins des revendications précédentes, caractérisé en ce qu'au moins un passage à réfrigérant (78) s'étend en direction radiale depuis le secteur de paroi élargi (76) vers le côté extérieur (44) du rotor (40), à travers lequel le réfrigérant (KM) peut parvenir à des barres (50) d'une cage de rotor (52) agencées sur le côté extérieur du rotor.

18. Moteur électrique sans balai selon l'une au moins des revendications précédentes, caractérisé en ce que dans l'espace intérieur libre (43) du rotor (40) est agencée au moins une partie d'une transmission (42).

19. Moteur électrique sans balai selon l'une au moins des revendications précédentes, caractérisé en ce que la transmission (42) est agencée dans un carter de transmission (86) étanche aux liquides, qui forme une fente annulaire (88) avec au moins un secteur (80) de la paroi de l'espace intérieur (43) du rotor (40).

20. Moteur électrique sans balai selon l'une au moins des revendications précédentes, caractérisé en ce que la transmission (42) est encapsulée dans le carter de transmission (86) et plongée sensiblement complètement dans de l'huile de transmission.

21. Procédé pour le fonctionnement d'un moteur électrique sans balai présentant les caractéristiques selon l'une au moins des revendications précédentes, caractérisé en ce que, lorsque le carter du moteur électrique est sensiblement dépourvu de bâche de réfrigérant, le dispositif de commande règle, dans la plage de 0 % à environ 100 % de la vitesse de rotation permanente et dans la plage d'environ 10 % à environ 60 % du couple de rotation maximum du moteur électrique, la relation entre le courant volumique de réfrigérant alimenté par la conduite d'amenée de réfrigérant et le courant volumique de réfrigérant évacué par la conduite d'évacuation de réfrigérant, de telle sorte que le réfrigérant s'écoule à travers la conduite d'amenée de réfrigérant jusque dans le récepteur ou dans les canaux de réfrigérant radiaux, parvient depuis cet endroit via le canal de réfrigérant jusque dans l'espace intérieur du rotor dans son secteur de paroi radialement élargi, d'où il parvient via le canal/les canaux de réfrigérant et la fente annulaire jusqu'aux têtes de stator ou jusqu'au côté extérieur du rotor.
